# EUROPÄISCHE PATENTSCHRIFT

(11) **EP 2 193 879 B1**
(45) Veröffentlichungstag und Bekanntmachung des Hinweises auf die Patenterteilung: **01.08.2012**
(21) Anmeldenummer: 08105942.0
(22) Anmeldetag: 05.12.2008
(51) Int. Cl.: B23Q 17/00, B23Q 11/00, B08B 3/10

(54) **Werkzeugreinigung**
Tool cleaning
Nettoyage d'outil

(43) Veröffentlichungstag der Anmeldung: 09.06.2010
(73) Patentinhaber: Mikron Agie Charmilles AG, 2560 Nidau (CH)
(72) Erfinder: Lüscher, Thomas, 5053 Staffelbach-Wittwil (CH); Rohr, Lukas, 3125 Toffen (CH); Besuchet, Jean-Philippe, 2000 Neuchâtel (CH)
(74) Vertreter: De Colle, Piergiacomo

(56) Entgegenhaltungen:
- EP-A- 1 591 196
- GB-A- 868 066
- GB-A- 2 300 591
- JP-A- 6 169 939
- JP-A- 2003 033 735
- US-A- 4 930 532

## Beschreibung

Die Erfindung betrifft ein Verfahren und eine Vorrichtung zur Reinigung und Vermessung von Werkzeugen einer Werkzeugmaschine.

In Werkzeugmaschinen werden Messvorrichtungen eingesetzt, um die für die Bearbeitung eines Werkstücks erforderlichen Werkzeuge zu vermessen. In der Regel wird die Geometrie (Länge, Durchmesser etc.) eines solchen Werkzeuges gemessen. Üblicherweise ist das Werkzeug in einer Aufnahme eingespannt und die Aufnahme in einer Spindel angeordnet. Zur Vermessung des Werkzeuges wird die Spindel mit dem in der Aufnahme eingespannten Werkzeug in eine Messvorrichtung, beispielsweise eine im Stand der Technik bekannte Lasereinrichtung, bewegt und somit die gewünschten Messwerte erfasst. Dieser Messvorgang kann einerseits bei stillstehendem und andererseits bei rotierendem Werkzeug erfolgen.

Bekanntlich wird das Werkzeug im Arbeitsprozess durch die üblicherweise benutzten Schmierstoffe, Emulsionen etc. verunreinigt, so dass eine Reinigung vor dem eigentlichen Messprozess notwendig wird, um möglichst genaue Messwerte zu erhalten.

In der EP 1 591 196 A1 ist ein Verfahren zur Vermessung eines Werkzeuges einer Werkzeugmaschine beschrieben. Hierbei wird das Werkzeug mittels einer Lasermessvorrichtung vermessen. Vor der Vermessung wird das Werkzeug mit einem öl - bzw. fettlösenden Mittel zur Reinigung besprüht.

Die EP 0 834 378 A1 offenbart eine Einrichtung zum Messen der Werkzeugdimensionen in einer Maschine zum mechanischen Bearbeiten von Werkstücken.

Eine weiteres Verfahren zum Vermessen einer Schraubenfläche an Messobjekten ist der DE 41 26 405 A1 zu entnehmen.

Alle im Stand der Technik aufgezeigten Reinigungsmethoden der Werkzeuge führen nicht zu befriedigenden Ergebnissen, so dass die Messungen fehlerhaft sind und hohe Streuschwankungen aufweisen

Weiter offenbart die GB 568 066 eine Werkzeugmaschine, welche auf die Massenproduktion von kleinen Werkstücken wie Schrauben, Nieten, Gleitlager etc. gerichtet ist. Mit der Maschine werden mittels entsprechender Werkzeuge die Werkstücke produziert und mit einem Förderband automatisch in eine Reinigungsvorrichtung transferiert und von dort in eine elektrisch Prüfvorrichtung befördert, wo die produzierten Werkstücke auf ihre Qualität geprüft werden. Die Reinigungsvorrichtung ist als Bad ausgeführt in welchem die Werkstücke mittels Ultraschall gereinigt werden.

Eine weitere Schrift, die GB 2 300 591 A, zeigt eine Werkzeugmaschine zur Holzverarbeitung, bei welcher der Radius der rotierenden Schneldmesser mittels einer Messvorrichtung - nach einer Reparatur oder Bestückung der Schneidvorrichtung mit neuen Messern -vermessen wird. Unabhängig hiervon werden die Messer auch regelmässig in einem Ultraschallbad gereinigt zwecks Verhinderung von längerfristigen Problemen bei der Holzverarbeitung (d.h. Entstehung einer unerwünschten geriffelten Holzoberfläche beim Fräsvorgang).

Ausgehend vom zitierten Stand der Technik und insbesondere von der GB 2 300 591 A liegt der Erfindung daher die Aufgabe zugrunde, ein Verfahren und eine Werkzeugmaschinen zu schaffen, die einerseits eine sehr genaue Messung bereits eingespannter Werkzeuge ohne grosse Streuungen ermöglicht und andererseits direkt in den nomalen Arbeitsprozess der Werkzeugmaschine integrierbar ist.

Erfindungsgemäss wird die Aufgabe dadurch gelöst, dass das zu vermessende Werkzeug (3) mittels Ultraschallwellen In einem mit einem Fluid gefüllten Behälter gereinigt wird.

Durch die Reinigung des Werkzeuges wird eine wesentlich höhere Messgenauigkeit gegenüber dem Stand der Technik erzielt.

Vorzugsweise erfolgt die Reinigung in einem mit einem Fluid gefüllten Behälter, wobei als Fluid beispielsweise Wasser oder ein öl - und/oder fettlösendes Mittel eingesetzt werden kann.

Der Behälter für die Ultraschallreinigung ist in der Werkzeugmaschine angeeigneter Stelle, nämlich möglichst nahe am Werkzeug, ohne den Bearbeitungsvorgang am Werkstück zu behindern, angeordnet, so dass vor der eigentlichen Ausmessung des Werkzeuges eine automatische Reinigung innerhalb des Arbeitsprozesses erfolgen kann.

Es ist möglich das Werkzeug bei still stehender oder rotierender Spindel zu reinigen, wobei die Geschwindigkeit der Spindel unterschiedlich sein kann. Die üblichen Zykluszeiten für die Reinigung betragen von 5 sec bis 15 sec. Bei drehender Spindel können sich in vorteilhafter Weise Partikel des Fluids aufgrund der Zentrifugalkraft lösen. Weiterhin kann falls erforderlich das gereinigte Werkzeug mittels einer Abblasvorrichtung getrocknet werden.

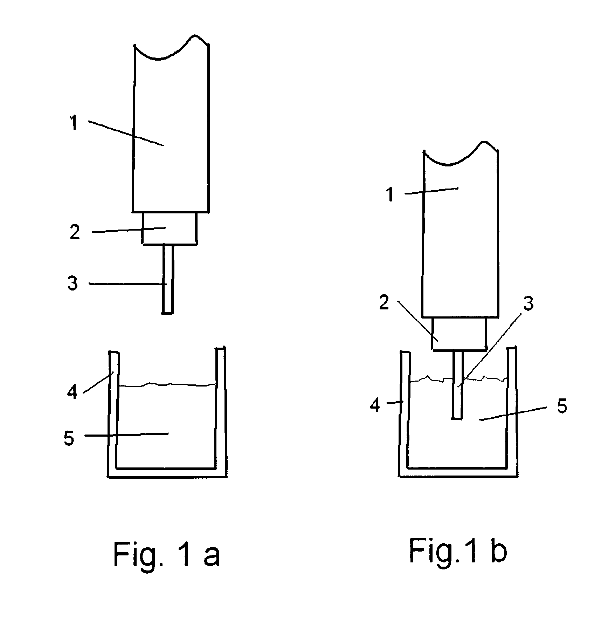

Die Erfindung wird im Folgenden als Ausführungsbeispiel in der Zeichnung dargestellt. Es zeigen
Fig. 1a die Spindel-Werkzeugeinrichtung ausserhalb des Ultraschallbades
Fig. 1b die Spindel-Werkzeugeinrichtung innerhalb des Ultraschallbades

In den Figuren 1a und 1b ist eine Spindel 1 mit einem Spannfutter 2 gezeigt. Das zureinigende Werkzeug 3 ist in dem Spannfutter 2 eingespannt. Unterhalb der Spindel 1 ist ein Behälter 4, welcher mit einem geeigneten Fluid für die Ultraschallreinigung gefüllt ist, vorgesehen. In Figur 1a ist die Spindel 1 mit dem Werkzeug 3 ausserhalb des Behälters dargestellt. Die Figur 1b zeigt die Position der Spindel 1 mit dem Werkzeug 3 in Reinigungsstellung.

Die Werkzeugmaschine und die an sich bekannte Messvorrichtung ist allgemeiner Stand der Technik und nicht in der Zeichnung dargestellt.

Die mit der Erfindung verbundenen Vorteile liegen insbesondere darin, dass mit der Verwendung einer Ultraschallreinigung eine sehr hohe Messgenauigkeit erreicht wird. Die Streuungen der geometrischen Grössen des Werkzeuges, wie beispielsweise der Werkzeuglänge oder des Werkzeugradiuses, können erheblich verkleinert werden. Man kann das Ultraschallbad so an der Werkzeugmaschine anzubringen, so dass man vor der Messung des Werkzeuges einen automatischen Reinigungszyklus starten kann. Dies kann vorteilhaft eine Verkürzung der Maschinenzeit zur Folge haben.

### Bezugszeichenliste

- 1: Spindel
- 2: Spannfutter, Aufnahme
- 3: Werkzeug
- 4: Behälter
- 5: Fluid

## Patentansprüche

1. Verfahren zur Reinigung und Vermessung eingespannter Werkzeuge (3) an einer Werkzeugmaschine, **dadurch gekennzeichnet, dass** das zu vermessende Werkzeug (3) mittels Ultraschallwellen gereinigt wird und dass die Ultraschallreinigung in einem mit einem Fluid (5) gefüllten Behälter (4) erfolgt.

2. Verfahren nach Anspruch 1, **dadurch gekennzeichnet, dass** als Fluid (5) Wasser verwendet wird.

3. Verfahren nach Anspruch 1, **dadurch gekennzeichnet, dass** als Fluid (5) eine öl - und/oder fettlösendes Mittel verwendet wird.

4. Verfahren nach einem der vorangehenden Verfahrensansprüche, **dadurch gekennzeichnet dass** die Reinigung des zu vermessenden Werkzeuges (3) in dem Arbeits -, Messprozess und/oder in dem Werkzeugwechsel integriert ist.

5. Werkzeugmaschine mit angeordnetem Ultraschallreinigungsbehälter (4) und Messvorrichtung zur automatischen Reinigung mittels Ultraschallwellen im Ultraschallreinigungsbehälter (4) und anschliessender Vermessung in der Messvorrichtung von in der Aufnahme (2) der Werkzeugmaschinenspindel (1) eingespannter Werkzeuge (3).

6. Werkzeugmaschine nach Anspruch 5, **dadurch gekennzeichnet, dass** der Ultraschallreinigungsbehälter (4) unmittelbar in der Nähe der Messvorrichtung und/oder des Werkzeugwechslers angeordnet ist.

## Claims

1. Method for cleaning and measuring clamped tools (3) on a machine tool, **characterized in that** the tool (3) to be measured is cleaned by means of ultrasonic waves, and **in that** the ultrasonic cleaning takes place in a vessel (4) filled with a fluid (5).

2. Method according to Claim 1, **characterized in that** water is used as fluid (5).

3. Method according to Claim 1, **characterized in that** an oil- and/or fat-dissolving agent is used as fluid (5).

4. Method according to one of the preceding method claims, **characterized in that** the cleaning of the tool (3) to be measured is integrated into the working process, measuring process and/or into the tool change.

5. Machine tool having a fitted ultrasonic cleaning vessel (4) and a measuring device, for automatic cleaning of tools (3) clamped in the mount (2) of the machine tool spindle (1) by means of ultrasonic waves in the ultrasonic cleaning vessel (4) and subsequent measuring of said tools (3) in the measuring device.

6. Machine tool according to Claim 5, **characterized in that** the ultrasonic cleaning vessel (4) is arranged in the immediate vicinity of the measuring device and/or of the tool changer.

## Revendications

1. Procédé de nettoyage et de mesure d'outils serrés (3) sur une machine-outil, **caractérisé en ce que** l'outil (3) à mesurer est nettoyé par des ultrasons et **en ce que** le nettoyage aux ultrasons s'effectue dans un récipient (4) rempli de fluide (5).

2. Procédé selon la revendication 1, **caractérisé en ce que** l'on utilise de l'eau en tant que fluide (5).

3. Procédé selon la revendication 1, **caractérisé en ce que** l'on utilise un agent dissolvant l'huile et/ou les graisses en tant que fluide (5).

4. Procédé selon l'une quelconque des revendications précédentes, **caractérisé en ce que** le nettoyage de l'outil à mesurer (3) est intégré au processus de travail, de mesure, et/ou au remplacement d'outil.

5. Machine-outil comprenant un récipient de nettoyage par ultrasons (4) et un dispositif de mesure pour le nettoyage automatique au moyen d'ultrasons dans le récipient de nettoyage par ultrasons (4) et pour la mesure subséquente dans le dispositif de mesure d'outils (3) serré dans le logement (2) de la broche (1) de la machine-outil.

6. Machine-outil selon la revendication 5, **caractérisée en ce que** le récipient de nettoyage par ultrasons (4) est disposé directement à proximité du dispositif de mesure et/ou du dispositif de remplacement d'outil.
